(19) Europäisches Patentamt
European Patent Office
Office européen des brevets

(11) **EP 4 637 082 A2**

(12) **EUROPEAN PATENT APPLICATION**

(43) Date of publication:
**22.10.2025 Bulletin 2025/43**

(21) Application number: **25169832.0**

(22) Date of filing: **10.04.2025**

(51) International Patent Classification (IPC):
***H04L 12/10*** (2006.01)          ***H04L 12/40*** (2006.01)

(52) Cooperative Patent Classification (CPC):
**H04L 12/10; H04L 12/40045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.04.2024 CN 202410439270**

(71) Applicant: **Nokia Solutions and Networks Oy 02610 Espoo (FI)**

(72) Inventors:
• **GAO, Jun**
  **Shanghai, 201206 (CN)**

• **LEI, Wei Lai**
  **Shanghai, 201209 (CN)**
• **ZHANG, Cheng An**
  **Shanghai, 201206 (CN)**
• **LUO, Bin**
  **Shanghai, 200127 (CN)**
• **SUN, Li Hua**
  **Shanghai (CN)**
• **LIU, Wei**
  **Shanghai, 201210 (CN)**

(74) Representative: **DREISS Patentanwälte PartG mbB**
**Friedrichstraße 6**
**70174 Stuttgart (DE)**

(54) **METHOD, APPARATUS AND COMPUTER READABLE STORAGE MEDIUM FOR POWERED DEVICE FED BY MULTIPLE POWER SOURCING EQUIPMENTS**

(57)    Example embodiments of the present disclosure relate to a method, apparatus, and computer-readable storage medium for a powered device fed by a plurality of power-supplying devices. The method comprises: obtaining operating states of a plurality of second devices connected to a plurality of connection ports of the first device; in response to the operating states indicating that feed voltages provided by at least two second devices among the plurality of second devices satisfy a predetermined voltage level, causing at least two switch units corresponding to the at least two second devices among a plurality of switch units to be alternately turned on, each of the plurality of switch units being coupled to a respective connection port of the plurality of connection ports, wherein the turned-on second devices supply power to the first device; and causing the first device to transmit communication signals to the at least two second devices, without transmitting communication signals to other second devices than the at least two second devices among the plurality of second devices.

FIG. 3

EP 4 637 082 A2

**Description**

**FIELD**

Example embodiments of the present disclosure relate to the field of communication technology, and more particularly, to methods, apparatuses and computer readable storage medium for a powered device fed by a plurality of power sourcing equipments.

**BACKGROUND**

Fixed Wireless Access (FWA) is a technology for implementing home broadband access based on cellular technology. In this solution, a connection between a wireless access point and a core network is implemented through a Uu air interface (that is, a wireless interface between the user equipment and the base station).

In order to save the access device cost of each user/home, multiple users may share a Multi-Dwelling Unit (MDU), and the MDU is powered by a Home Unit (HOU) through Power over Ethernet (PoE). In this way, the MDU not only can realize multi-user access, but also can reduce network deployment and operation and maintenance costs through PoE sharing power supply.

**SUMMARY**

In a first aspect of the present disclosure, a method for a first device is provided. The method comprises: obtaining operating states of a plurality of second devices connected to a plurality of connection ports of the first device; in response to the operating states indicating that feed voltages provided by at least two second devices among the plurality of second devices satisfy a predetermined voltage level, causing at least two switch units corresponding to the at least two second devices among a plurality of switch units to be alternately turned on, each of the plurality of switch units being coupled to a respective connection port of the plurality of connection ports, wherein the turned-on second devices supply power to the first device; and causing the first device to transmit communication signals to the at least two second devices, without transmitting communication signals to other second devices than the at least two second devices among the plurality of second devices.

In a second aspect of this disclosure, a first device is provide. The first device comprises: a plurality of connection ports adapted to connect to a plurality of second devices; a plurality of switch units each coupled to a respective connection port of the plurality of connection ports; and a processing unit coupled to the plurality of switch units and configured to: obtain operating states of a plurality of second devices; in response to the operating states indicating that feed voltages provided by at least two second devices among the plurality of second devices satisfy a predetermined voltage level, cause at least two switch units corresponding to the at least two second devices among a plurality of switch units to be alternately turned on, wherein the turned-on second devices supply power to the first device; and cause the first device to transmit communication signals to the at least two second devices, without transmitting communication signals to other second devices than the at least two second devices among the plurality of second devices.

In a third aspect of this disclosure, a computer-readable storage medium is provided, which has a computer program stored thereon. The computer program comprises instructions that, when executed by a processor on a device, cause the device to perform the method of the first aspect.

It should be understood that content described in this summary section is not intended to limit key or important features of the embodiments of the present disclosure, nor is it intended to limit the scope of the present disclosure. Other features of the present disclosure will be readily comprehensible from the following description.

**BRIEF DESCRIPTION OF DRAWINGS**

Example embodiments of the present disclosure are presented by way of example, and their advantages are explained in more detail below with reference to the accompanying drawings, in which

FIG. 1 illustrates a schematic diagram of an environment in which example embodiments described herein may be implemented;
FIG. 2 illustrates a flowchart of a method for a first device according to some example embodiments of the present disclosure;
FIG. 3 illustrates a circuit block diagram of a first device that may be connected to two second devices PSE_1 and PSE_2 according to some example embodiments of the present disclosure;
FIGS. 4A and 4B illustrate example implementations of the first device shown in FIG. 3;
FIGS. 5A-5D illustrate control logic within the first device shown in FIG. 4A;

FIG. 6A illustrates a signal timing diagram of the first device shown in FIG. 4A when the two second devices PSE_1 and PSE_2 are powered on;

FIG. 6B shows a signal timing diagram of the first device shown in FIG. 4A when only a single second device is powered on;

FIG. 7A shows a schematic circuit diagram of a portion of a voltage detection unit and a switch unit in the first device shown in FIG. 4A;

FIG. 7B shows an example process of turning on PSE_2 using the switch unit shown in FIG. 7A;

FIG. 7C shows an example process of turning off PSE_2 by using the switch unit shown in FIG. 7A;

FIG. 8 illustrates control logic within the first device shown in FIG. 4B;

FIG. 9 illustrates a simplified block diagram of a device suitable for implementing example embodiments of the present disclosure; and

FIG. 10 illustrates a schematic diagram of a computer-readable medium according to some example embodiments of the present disclosure.

Throughout the drawings, the same or similar reference numerals denote the same or similar elements.

## DETAILED DESCRIPTION

The principles and spirit of the present disclosure will be described below with reference to several example embodiments shown in the accompanying drawings. It should be understood that these specific example embodiments are described only to enable those skilled in the art to better understand and implement the present disclosure, and do not limit the scope of the present disclosure in any way.

As used herein, the term "comprise" and similar terms should be understood as open inclusion, i.e., "include but not limited to." The term "based on" should be understood to be "based at least in part on". The terms "one embodiment" or "the embodiment" should be understood as "at least one embodiment". The terms "first," "second," and the like may refer to different or identical objects. Other explicit and implicit definitions may also be included below.

As used herein, the term "determine" encompasses a wide variety of actions. For example, "determining" may include calculating, computing, processing, deriving, investigating, looking up (e.g., looking up in a table, database, or another data structure), ascertaining, etc. Further, "determining" may include receiving (e.g., receiving information), accessing (e.g., accessing data in memory), etc. Further, "determining" may include parsing, selecting, choosing, establishing, etc.

As used herein, unless stated explicitly, performing a step "in response to A" does not indicate that the step is performed immediately after "A" occurs and one or more intervening steps may be included.

As used herein, the term "circuitry" may refer to one or more or all of the following: (a) hardware-only circuit implementations (such as implementations in only analog and/or digital circuitry); and (b) combinations of hardware circuits and software, such as (as applicable): (i) a combination of analog and/or digital hardware circuit with software/firmware; and (ii) any portions of hardware processor with software (including digital signal processor, software, and memory that work together to cause an apparatus, such as an optical communication apparatus or other computing device, to perform various functions); and (c) hardware circuit and or processor, such as a microprocessor or a portion of a microprocessor, that requires software (e.g., firmware) for operation, but the software may not be present when it is not needed for operation.

This definition of circuitry applies to all usage scenarios of this term in this application, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit or a similar integrated circuit in OLT or other computing device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. The example embodiments of the present disclosure may be applied in various communication systems, including but not limited to terrestrial communication systems, non- terrestrial communication systems or combination thereof. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, and the like, depending on the applied terminology and technology.

The term "terminal device" as used herein refers to any end device that may be capable of wireless communication. By way of example rather than limitation, a terminal device may also be referred to as a network device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playing appliances, vehicle-mounted wireless terminal devices, wireless endpoints, mobile stations, laptop-embedded equipment (LEE), laptop-mounted equipment (LME), Universal Serial Bus (USB) dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may correspond to a Mobile Termination (MT) part of an IAB node (e.g., a relay node). In the following description, the terms "terminal device", "network device", "terminal", "user equipment" and "UE" may be used interchangeably.

As used in this application, the term "circuit" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as OLT or other computing device, to perform various functions); and

(c) hardware circuit(s) and or processor(s), such as a microprocessor(s) or a portion of a microprocessor(s), that requires software (e.g., firmware) for operation, but the software may not be present when it is not needed for operation.

This definition of circuit applies to all usage scenarios of this term in this application, including in any claims. As a further example, as used herein, the term circuit also covers an implementation of merely a hardware circuit or processor (or multiple processors) or portion of a hardware circuit or processor and its (or their) accompanying software and/or firmware. The term circuit also covers, for example and if applicable to the particular claim element, a baseband integrated circuit or processor integrated circuit or a similar integrated circuit in OLT or other computing device.

As already mentioned above, in a cellular fronthaul PON, in order to save the access device cost of each user/home, multiple users may share a Multi-Dwelling Unit (MDU), and the MDU is powered by a Home Unit (HOU) through Power over Ethernet (PoE). In this way, the MDU not only can realize multi-user access, but also can reduce network deployment and operation and maintenance costs through PoE sharing power supply.

Generally, there are the following conventional solutions for a powered device (PD) powered by a plurality of power sourcing equipment (PSE). In one approach, an interface selector may be used at the PSE side to decide which PSE to use to power the PD. However, the structure of the interface selector is complicated, which leads to a significant increase in cost of hardware including analog circuits and logic circuits and cost of software algorithm. In another solution, for one PD, the pins PIN1/2/3/6 or 4/5/7/8 of the 2P4T switch may be used to support two PSEs. The power from the two PSEs is distributed to the two sets of pins PIN1/2/3/6 and PIN4/5/7/8. However, there is currently no reliable solution for effectively merging these two power sources.

Therefore, the embodiments of the present disclosure provide a dynamic selection solution for power sourcing equipment. According to the scheme, the PSE is dynamically divided into a power-on group and a power-off group by the real-time monitoring of power-on and power-off states of all power supply equipment (PSE). The power-on group and the power-off group are periodically updated according to the latest monitoring data. If there are more than two PSEs in the power-on state, the powered device (PD) alternately allocates a power-supplying time window to each PSE in different time periods, thereby ensuring that all power-on PSEs can fairly supply power to the PD. On the other hand, for those PSEs or home units (HOU) in the power-off state, a PD or a multi-dwelling unit (MDU) takes measures to terminate physical layer (PHY) signal communication with these power-off HOUs, effectively preventing communication of the power-off HOUs.

In this way, the fairness of power supply between a plurality of PDs connected to the PSE can be ensured, the reliability of power supply of the PDs can be ensured, and the cost of software and hardware of the implementation solution is relatively low.

The principles and example embodiments of the present disclosure will be described in detail below with further reference to the accompanying drawings.

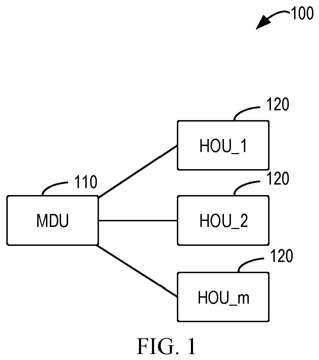

FIG. 1 illustrates a schematic diagram of an example environment 100 in which example embodiments described herein may be implemented. The environment 100 may be part of a communication network. The environment 100 comprises a first device 110 and a plurality of second devices 120. The first device 110 may be connected to each second device 120 through a cable. The plurality of second devices 120 may supply power to the first device 110, and the first device 110 may communicate with the plurality of second devices 120.

In some embodiments, the first device 110 may be the PSE mentioned above, and the second device 120 may be the PD mentioned above.

In some embodiments, the first device 110 may be connected to the plurality of second devices 120 through Power over Ethernet (PoE) technology. PoE technology allows simultaneous transmission of data signals and direct current over Ethernet lines to provide power supply for PDs connected to the network.

The lengths of PoE lines between the second devices 120 and the first device 110 are different, and therefore voltages transmitted by the second devices 120 to the first device 110 may be different. As a result, the second device 120 providing the maximum voltage to the first device 110 may be in activated state. On one hand, this situation will affect the sharing of electricity charges in the HOUs where the second devices 120 are located, and on the other hand, using the same activated PSE for a long time will affect the overall system reliability.

It should be understood that the number of devices and their connections shown in FIG. 1 is merely illustrative and not limiting. The environment 100 may include any suitable number of devices configured to implement example embodiments of the present disclosure. Although not shown, it should be understood that one or more other devices may be deployed in the environment 100.

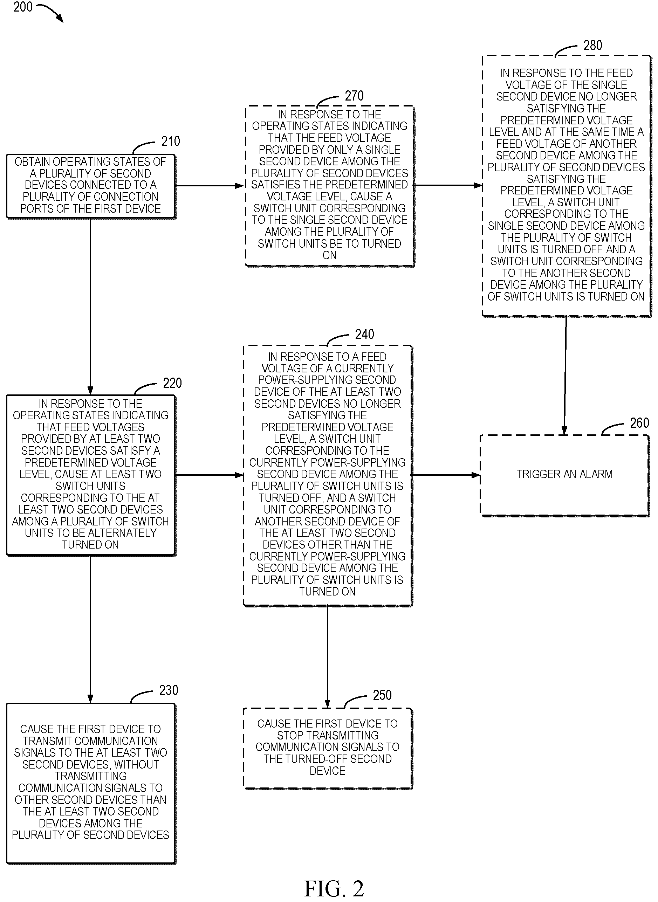

FIG. 2 illustrates a flowchart of a method for the first device 110 according to some example embodiments of the present disclosure. The process 200 shown in FIG. 2 may involve a first device 110, such as a PD.

As shown in FIG. 2, at block 210, the first device 110 obtains operating states of a plurality of second devices connected to a plurality of connection ports of the first device 110.

For example, the plurality of connection ports may be PoE ports. The second device 120 may be connected to the first device 110 through a respective PoE port. The operating state of the second device 120 may be, for example, a voltage level of a power supplied by the second device 120 to the first device 110 via the respective PoE port.

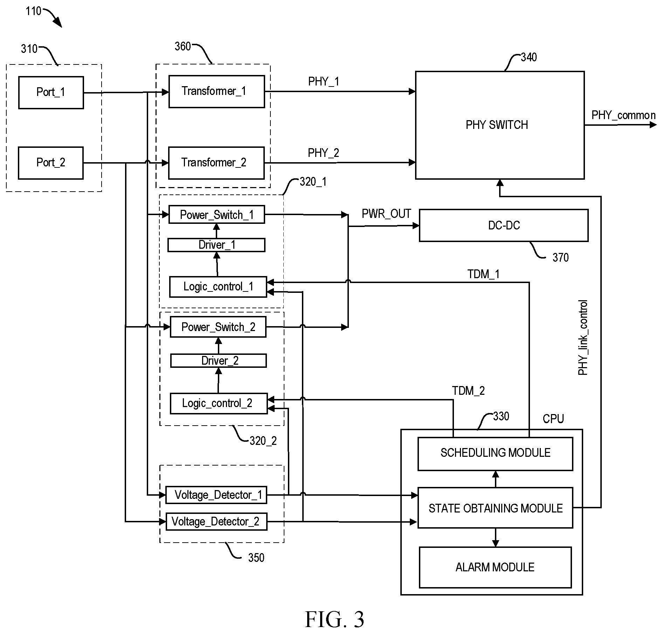

As shown in FIG. 2, at block 220, in response to the operating states indicating that feed voltages provided by at least two second devices 120 among the plurality of second devices 120 satisfy a predetermined voltage level, the first device 110 causes at least two switch units corresponding to the at least two second devices among a plurality of switch units to be alternately turned on, wherein each of the plurality of switch units is coupled to a respective connection port of the plurality of connection ports, wherein the turned-on second devices 120 supply power to the first device 110. An example implementation of the switch unit will be described in detail below in conjunction with FIG. 3.

The first device 110 continuously monitors the feed voltages provided by all the second devices 120. When the first device 110 detects that the feed voltages provided by the at least two second devices 120 reach the predetermined voltage level, the first device 110 takes a corresponding action to perform power supply control. Specifically, the first device 110 realizes power supply control by controlling a plurality of switch units. The switch units are respectively coupled to a plurality of connection ports of the first device 110, and each connection port corresponds to one switch unit. For the at least two second devices 120 whose feed voltages meet the predetermined voltage level, the first device 110 makes at least two switch units corresponding thereto to be turned on alternatively.

For example, it is assumed that three second devices 120 are connected to the first device 110, namely, the second devices PSE_1, PSE_2, and PSE_3. They are connected to the first device 110 through respective connection ports, and the feed voltages currently provided by PSE_1 and PSE_2 satisfy the predetermined voltage level, while the feed voltage currently provided by PSE_3 does not satisfy the predetermined voltage level. In this case, the first device 110 controls the switch units corresponding to the PSE_1 and the PSE_2 to be alternately turned on, so that the two devices alternately supply power to the first device 110. While the switch unit corresponding to the device PSE_3 that does not meet the predetermined voltage level remains in a turned-off state, so that the PSE_3 does not participate in power supply. In this way, the purpose of dynamically switching the source of power supply of the first device 110 based on the power-on state of each second device 120 is achieved, and the reliability and fairness of power supply are ensured.

In some embodiments, the first device 110 may cause the at least two switch units corresponding to the at least two second devices 120 whose feed voltages satisfy the predetermined voltage level to be alternately turned on through time division multiplexing. The at least two switch units are turned on for the same duration.

For example, in a case that the feed voltages of the PSE_1 and the PSE_2 satisfy the predetermined voltage level but that of the PSE_3 does not, the first device 110 may control the switch units corresponding to the PSE_1 and the PSE_2 to be alternately turned on through time division multiplexing, so that the two devices alternately supply power to the first device 110.

Because there may be a certain delay between switching of power supply of the at least two second devices 120, it needs to be ensured that the first device 110 is not powered off during switching. To this end, in some embodiments, the first device 110 causes the turned-on time of successively turned-on switch units of the at least two switch units to be partially overlapped. In this way, it is possible to avoid power failure of the first device 110 due to the switching process.

As shown in FIG. 2, at block 230, the first device 110 is caused to transmit communication signals to the at least two second devices 120 whose feed voltages satisfy the predetermined voltage level, without transmitting communication signals to other second devices than the at least two second devices among the plurality of second devices.

For example, in a case where the feed voltages of PSE_1 and PSE_2 satisfy the predetermined voltage level but that of PSE_3 does not, the first device 110 will only transmit communication signals to PSE_1 and PSE_2, but not to PSE_3.

In some cases, the voltage of the currently power-supplying second device 120 may be abnormal, for example, the feed voltage is too low or a power failure occurs. At this time, it is necessary to switch to another second device 120 that satisfies the predetermined voltage level in time to ensure reliable power supply to the first device 110. To this end, in some embodiments, as shown in FIG. 2, at block 240, in response to a feed voltage of a currently power-supplying second device 120 of the at least two second devices 120 no longer satisfying the predetermined voltage level, a switch unit corresponding to the currently power-supplying second device 120 among the plurality of switch units is turned off, and a switch unit corresponding to another second device 120 of the at least two second devices 120 other than the currently power-supplying second device 120 among the plurality of switch units is turned on. The turn-on and turn-off of the second device 120 are hot switching, which will not cause power failure and service interruption of the first device 110.

For example, in a case where the feed voltages of PSE_1 and PSE_2 satisfy the predetermined voltage level but that of PSE_3 does not, if PSE_1 is currently supplying power but a voltage abnormality occurs, the switch unit corresponding to PSE_1 will be turned off. Meanwhile, the switch unit corresponding to PSE_2 will be turned on. In this way, reliable continuous power supply to the first device 110 is ensured.

In some embodiments, as shown in FIG. 2, at block 250, when the currently power-supplying second device 120 is turned off due to the voltage abnormality, the first device 110 stops transmitting the communication signals to the turned-off second device 120.

In some embodiments, as shown in FIG. 2, at block 260, the first device 110 triggers an alarm in response to the feed voltage of the currently power-supplying second device 120 no longer satisfying the predetermined voltage level.

In some embodiments, as shown in FIG. 2, at block 270, in response to the operating states indicating that the feed voltage provided by only a single second device 120 among the plurality of second devices 120 satisfies the predetermined voltage level, the first device 110 causes a switch unit corresponding to the single second device 120 among the plurality of switch units be to turned on, wherein the single second device 120 supplies power to the first device 110.

For example, in a case that the feed voltage of the PSE_1 satisfies the predetermined voltage level and the feed voltages of the PSE_2 and the PSE_3 do not satisfy the predetermined voltage level, the first device 110 may cause a switch unit corresponding to the PSE_1 among the plurality of switch units to be turned on, and cause the switch units corresponding to the PSE_2 and the PSE_3 to be turned off.

Where only a single second device 120 provides a feed voltage that satisfies the predetermined voltage level and supplies power to the first device 110, a situation may arise where the single second device 120 is powered off or the voltage is too low to no longer satisfy the predetermined voltage level, while the voltage of another second device 120 satisfies the predetermined voltage level. To this end, in some embodiments, as shown in FIG. 2, at block 280, in response to the feed voltage of the single second device 120 no longer satisfying the predetermined voltage level and at the same time a feed voltage of another second device 120 among the plurality of second devices 120 satisfying the predetermined voltage level, a switch unit corresponding to the single second device 120 among the plurality of switch units is turned off and a switch unit corresponding to the another second device 120 among the plurality of switch units is turned on. The turn-on and turn-off of the second device 120 are hot switching, which will not cause power failure and service interruption of the first device 110.

For example, in a case where the feed voltage of PSE_1 satisfies the predetermined voltage level and the feed voltages of PSE_2 and PSE_3 do not satisfy the predetermined voltage level, if PSE_1 is powered off or the voltage is too low to satisfy the predetermined voltage level and the feed voltage of PSE_2 satisfies the predetermined voltage level, the switch unit corresponding to PSE_1 is turned off, and the switch unit corresponding to PSE_2 is turned on. In this way, reliable continuous power supply of the first device 110 may be ensured.

Similarly, as shown in FIG. 2, at block 260, in response to the feed voltage of the single second device 120 satisfying the predetermined voltage level no longer satisfying the predetermined voltage level, the first device 110 triggers an alarm.

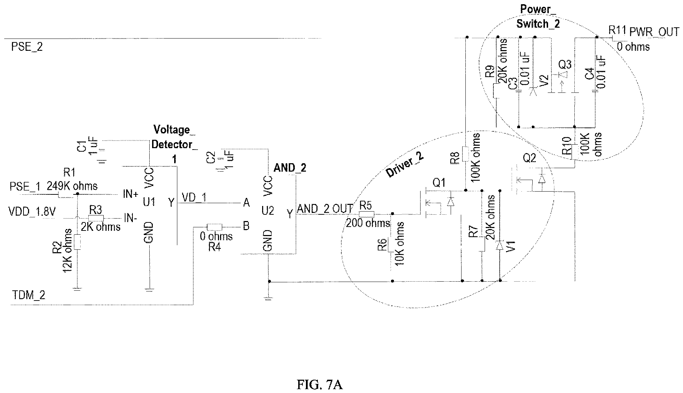

In some embodiments, the operating states of the second devices 120 are generated by a voltage detection unit coupled to the plurality of connection ports. The voltage detection unit may detect feed voltages provided by the plurality of second devices 120, compare the detected feed voltages to a predetermined threshold, and generate the operating states based on the comparison. An example circuit structure of the voltage detection unit will be described below with reference to FIGS. 7A to 7C.

Next, an example structure of the first device 110 for implementing the process 200 will be described in conjunction with the accompanying drawings. Referring first to FIG. 3, FIG. 3 illustrates a circuit block diagram of a first device 110 according to some example embodiments of the present disclosure. Here, the principle of the present disclosure will be described for example with the first device 110 connected to two second devices PSE_1 and PSE_2. It should be understood that the principles of the present disclosure are equally applicable where the first device 110 is connected to more second devices 120.

As shown in FIG. 3, the first device 110 comprises an interface unit 310. The interface unit 310 comprises a plurality of connection ports for connecting to a plurality of second devices 120. In some embodiments, as shown in FIG. 3, the interface unit 310 comprises a port Port_1 and a port Port_2, where the port Port_1 is configured to connect to the second device PSE_1, and the port Port_2 is configured to connect to the second device PSE_2. Port Port_1 and Port_2 may be PoE ports or any other suitable type of port.

As shown in FIG. 3, the first device 110 comprises a voltage detection unit 350. The voltage detection unit 350 is configured to detect operating states of the plurality of second devices 120. In some embodiments, as shown in FIG. 3, the voltage detection unit 350 comprises a voltage detector Voltage_Detector_1 and Voltage_Detector_2, which are configured to detect operation states of PSE_1 and PSE_2, respectively. The voltage detector Voltage_Detector_1 may detect the feed voltage of PSE_1 and compare the feed voltage of PSE_1 with a predetermined threshold to generate an operating state of PSE_1. The voltage detector Voltage_Detector_2 may detect the feed voltage of PSE_2 and compare the feed voltage of PSE_2 with a predetermined threshold to generate an operating state of PSE_2. By using the voltage detection unit 350, whether the plurality of second devices 120 are powered on and/or whether a voltage abnormality occurs may be detected, and a detection result is provided to the processing unit 330. In some embodiments, the detection result may be provided to the processing unit 330 in a transistor-transistor logic (TTL) level or any other suitable form.

As shown in FIG. 3, the first device 110 comprises a plurality of switch units each coupled to a respective connection port of the plurality of connection ports. For example, the switch unit 320_1 is connected to the port Port_1, and the switch unit 320_2 is connected to the port Port_2. Through the on-off states of the plurality of switch units, different second devices 120 may be used to supply power to the first device 110. The on-off states of the switch units 320_1 and 320_2 may be controlled by the processing unit 330 according to the detection result of the voltage detection unit 350, which will be described in detail below. The outputs PWR_OUT of the plurality of switch units may be connected to a power conversion module 370 in the first device 110, and the power conversion module 370 is configured to perform DC-DC conversion as required.

In some embodiments, as shown in FIG. 3, each switch unit comprises a logic control circuit, a drive circuit and a power switch component. The logic control circuit may generate a control signal based on the operating state of the second device 120. The drive circuit may generate a drive signal based on a control signal from the logic control circuit. The power switch component may switch between on and off states under control of a drive signal. For example, the switch unit 320_1 comprises a logic control circuit Logic_control_1, a drive circuit Driver_1, and a power switch component Power_Switch_1. The switch unit 320_2 comprises a logic control circuit Logic_control_2, a drive circuit Driver_2, and a power switch component Power_Switch_2.

As shown in FIG. 3, the first device 110 may further comprise a transformer unit 360. The transformer unit 360 is configured to extract a power signal and a physical layer (PHY) signal from the PoE, combine the power signal and the PHY signal into the PoE, and send the PoE to the PHY switch 340. For example, the transformer unit 360 may comprise transformers Transformer_1 and Transformer_2. The transformer Transformer_1 is connected to the port port_1, and is capable of outputting PHY signal PHY_1. The transformer Transformer_2 is connected to the port port_2, and is capable of outputting PHY signal PHY_2. The PHY link of the PHY switch 340 may be controlled by the processing unit 330 through the control signal PHY_link_control, to allow communication of the powered-on second device 120 and prevent communication of the powered-off second device 120.

It should be understood that the first device 110 may further comprise one or more other circuits or modules, such as surge suppression circuits and power common-mode suppression circuits associated with power supply, which will not be repeated herein.

The processing unit 330 may be configured to perform a part of the process 200 described above. In some embodiments, as shown in FIG. 3, the processing unit 330 comprises a state obtaining module, a scheduling module, and an alarm module. The state obtaining module may obtain operating states of the plurality of second devices 120, for example, operating states of PSE_1 and PSE_2. In response to the operating states indicating that feed voltages provided by at least two second devices 120 among the plurality of second devices 120 satisfy a predetermined voltage level, the scheduling module may cause at least two switch units corresponding to the at least two second devices among a plurality of switch units to be alternately turned on. For example, in response to the operating states indicating that feed voltages provided by PSE_1 and PSE_2 both satisfy the predetermined voltage level, the scheduling module may cause the switch unit 320_1 and 320_2 to be alternately turned on. The alarm module may trigger an alarm in the case that the currently power-supplying second device 120 is powered off or other abnormal voltage occurs.

In some embodiments, the scheduling module in the processing unit 330 may be further configured to cause the at least two switch units to be alternatively turned on through time division multiplexing, and the at least two switch units are turned on for a same duration. For example, in a case where the operating state indicates that the feed voltages provided by PSE_1 and PSE_2 both satisfy the predetermined voltage level, the processing unit 330 may cause the switch units 320_1 and 320_2 to be alternately turned on through time division multiplexing. Through time division multiplexing, it can be ensured that the first device 110 can be stably and reliably powered.

In some embodiments, the processing unit 330 may be further configured to: cause turned-on time of successively turned-on switch units of the at least two switch units to be partially overlapped. For example, in a case where the operating state indicates that the feed voltages provided by PSE_1 and PSE_2 both satisfy the predetermined voltage level, the processing unit 330 may cause the turned-on time of the switch units 320_1 and 320_2 to be partially overlapped.

In some embodiments, in response to a feed voltage of a currently power-supplying second device 120 of the at least two second devices 120 no longer satisfying the predetermined voltage level, a switch unit corresponding to the currently power-supplying second device 120 among the plurality of switch units is turned off, and a switch unit corresponding to another second device 120 of the at least two second devices 120 other than the currently power-supplying second device 120 among the plurality of switch units is turned on.

For example, when the feed voltages provided by the PSE_1 and the PSE_2 both satisfy the predetermined voltage level, if the PSE_1 is currently supplying power but a voltage abnormality occurs, the switch unit 320_1 corresponding to the PSE_1 will be turned off. Meanwhile, the switch unit 320_2 corresponding to PSE_2 will be turned on. In this way, reliable continuous power supply to the first device 110 is ensured.

In some embodiments, in response to the feed voltage of the currently power-supplying second device 120 of the at least two second devices 120 no longer satisfying the predetermined voltage level, the processing unit 330 causes the first device 110 to stop transmitting the communication signals to the turned-off second device 120.

In some embodiments, the alarm module of the processing unit 330 triggers an alarm in response to the feed voltage of the currently power-supplying second device 120 no longer satisfying the predetermined voltage level.

In some embodiments, the processing unit 330 is further configured to: in response to the operating states indicating that the feed voltage provided by only a single second device 120 among the plurality of second devices 120 satisfies the predetermined voltage level, the first device 110 causes a switch unit corresponding to the single second device 120 among the plurality of switch units be to turned on, wherein the single second device 120 supplies power to the first device 110. In case the feed voltage provided by only a single second device 120 satisfies the predetermined voltage level, the scheduling module of the processing unit 330 may update to the relevant state according to the states of the plurality of second devices 120.

For example, when the feed voltage of the PSE_1 satisfies the predetermined voltage level and the feed voltage of the PSE_2 does not satisfy the predetermined voltage level, the first device 110 may cause the switch unit 320_1 corresponding to the PSE_1 to be turned on, and cause the switch unit 320_2 corresponding to the PSE_2 to be turned off.

In some embodiments, in response to the feed voltage of the single second device 120 no longer satisfying the predetermined voltage level and at the same time a feed voltage of another second device 120 among the plurality of second devices 120 satisfying the predetermined voltage level, a switch unit corresponding to the single second device 120 among the plurality of switch units is turned off and a switch unit corresponding to the another second device 120 among the plurality of switch units is turned on.

For example, in a case where the feed voltage of the PSE_1 satisfies the predetermined voltage level and the feed voltage of the PSE_2 does not satisfy the predetermined voltage level, if the PSE_1 is powered off or the voltage is too low to satisfy the predetermined voltage level and at the same time the feed voltage of the PSE_2 satisfies the predetermined voltage level, the switch unit 320_1 corresponding to the PSE_1 is turned off, and the switch unit 320_2 corresponding to the PSE_2 is turned on.

In some embodiments, the rated power of the first device 110 should be below the load capacity of each first device 120 to ensure safe and reliable operation of the first device 110.

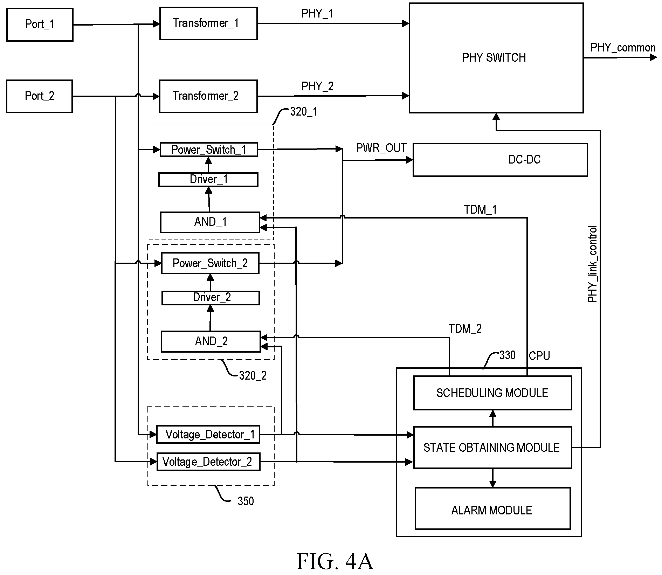

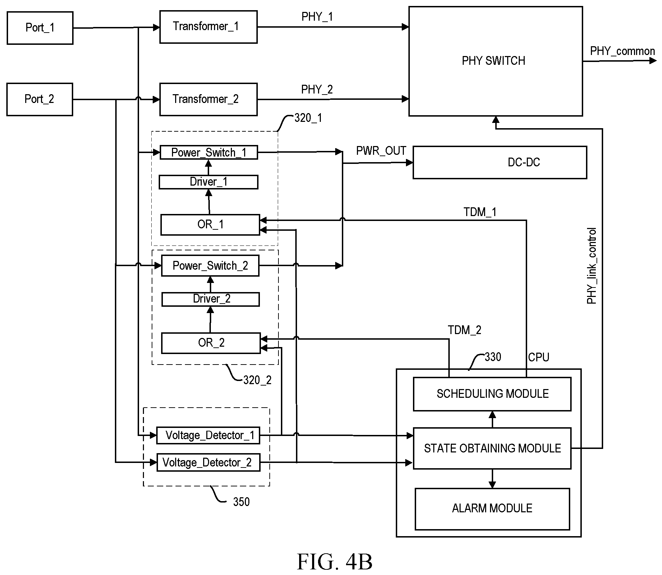

FIGS. 4A and 4B illustrate an example implementation of the first device 110 shown in FIG. 3. The structures of the first device 110 shown in FIG. 4A and that in FIG. 4B are similar, and the difference mainly lies in the logic control circuit. The switch units 320_1 and 320_2 in the first device 110 shown in FIG. 4A mainly turn on the corresponding second device 120 based on a low level, and the switch units 320_1 and 320_2 in the first device 110 shown in FIG. 4B mainly turn on the corresponding second device 120 based on a high level.

In some embodiments, as shown in FIG. 4A, the logic control circuit in each switch unit is implemented by an AND gate to turn on the corresponding second device 120 based on a low level. For example, the logic control circuit in the switch unit 320_1 is implemented by an AND gate AND_1, and the logic control circuit in the switch unit 320_2 is implemented by an AND gate AND_2.

In some embodiments, as shown in FIG. 4B, the logic control circuit in each switch unit is implemented by an OR gate to turn on the corresponding second device 120 based on the high level. For example, the logic control circuit in the switch unit 320_1 is implemented by an OR gate OR_1, and the logic control circuit in the switch unit 320_2 is implemented by an OR gate OR_2.

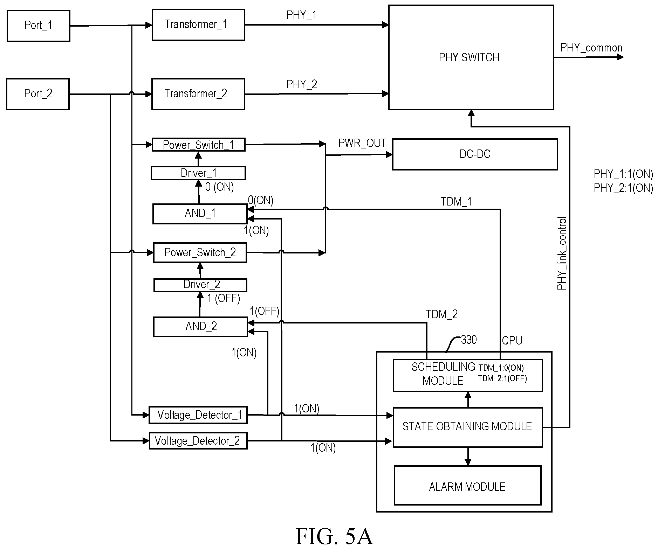

Next, the control logic within the first device 110 shown in FIG. 4A will be described in conjunction with FIGS. 5A-5D. It should be understood that the control logic described in conjunction with FIGS. 5A to 5D is merely an example, and other logic circuit implementations capable of implementing the process 200 not explicitly mentioned also fall within the scope of the present disclosure. The truth table for the control logic within the first device 110 is also shown in Table 1 below. The control logic shown in FIGS. 5A-5D will be described below with reference to Table 1.

Table 1 Truth table for the control logic within the first device

| Status | | Probability | Voltage Detector (High:0 N) | | Scheduling module (Low: ON) | | Driving circuit (Low: ON) | | PWR_OUT (High: ON) | | PHY (High:ON ) | | Alarm module | figure |
|---|---|---|---|---|---|---|---|---|---|---|---|---|---|---|
| | | | VD_1 | VD_2 | TDM_1 | TDM_2 | AND_1 OUT | AND_2 OUT | PSE_1 | PSE_2 | PHY_1 | PHY_2 | | |
| Steady states | (A) two PSEs are both powered on | High | 1 | 1 | 0 | 1 | 0 | 1 | 1 | 0 | 1 | 1 | NA | Fig. 5A |
| | | | | | 1 | 0 | 1 | 0 | 0 | 1 | 1 | 1 | NA | Similar with Fig. 5A |
| | (B) Only one PSE is powered on | Middle | 1 | 0 | 0 | 1 | 0 | 1 | 1 | 0 | 1 | 0 | NA | Similar with Fig. 5B |
| | | | 0 | 1 | 1 | 0 | 1 | 0 | 0 | 1 | 0 | 1 | NA | Fig. 5B |
| | (C) Neither of PSEs is powered on | Low | 0 | 0 | NA | NA | NA | NA | NA | NA | NA | NA | NA | NA |
| Transient states | (D) two PSEs are both powered on --> Suddenly one PSE becomes powered down | Middle | 1->0 | 1 | 0->1 | 1->0 | 0->1 | 1->0 | 1->0 | 0->1 | 1->0 | 1 | PSE1 power down alarm | Fig. 5C |
| | | | | | 1 | 0 | 1 | 0 | 0 | 1 | 0 | 1 | PSE1 power down alarm | Similar with Fig. 5A |
| | | | 1 | 1->0 | 1->0 | 0->1 | 1->0 | 0->1 | 0->1 | 1->0 | 1 | 1->0 | PSE2 power down alarm | Similar with Fig. 5C |
| | | | | | 0 | 1 | 0 | 1 | 1 | 0 | 1 | 0 | PSE2 power down alarm | Similar with Fig. 5A |
| | (E) two PSEs are both powered on | Low | 1->0 | 1->0 | NA | NA | NA | NA | NA | NA | NA | NA | NA | NA |

10

| Status | Probability | Voltage Detector (High:0 N) | | Scheduling module (Low: ON) | | Driving circuit (Low: ON) | | PWR_OUT (High: ON) | | PHY (High:ON ) | | Alarm module | figure |
|---|---|---|---|---|---|---|---|---|---|---|---|---|---|
| | | VD_1 | VD_2 | TDM_1 | TDM_2 | AND_1 OUT | AND_2 OUT | PSE_1 | PSE_2 | PHY_1 | PHY_2 | | |
| --> Suddenly dual PSEs becomes both powered down | | | | | | | | | | | | | |
| (F) Only one PSE is powered on --> Neither of PSEs becomes powered on. | Low | 1-->0 | 0 | 1->NA | 0->NA | 1->NA | NA | 1->NA | 0->NA | 1->NA | 0->NA | PSE2 power down alarm | NA |
| | | 0 | 1->NA | 0->NA | 1->NA | 0->NA | 1->NA | 0->NA | 1->0 | 0->NA | 1->NA | PSE1 power down alarm | NA |
| (G) Only one PSE is powered on --> Still only one PSE is powered, but it's another one. | Very low | 1->0 | 0->1 | 0->1 | 1->0 | 0->1 | 1->0 | 1->0 | 0->1 | 1->0 | 0->1 | PSE2 power down alarm | Fig. 5D |
| | | 0->1 | 1->0 | 1->0 | 0->1 | 1->0 | 0->1 | 0->1 | 1->0 | 0->1 | 1->0 | PSE1 power down alarm | Similar with Fig. 5D |

EP 4 637 082 A2

11

(A) The case is firstly described where two second devices PSE_1 and PSE_2 are powered on.

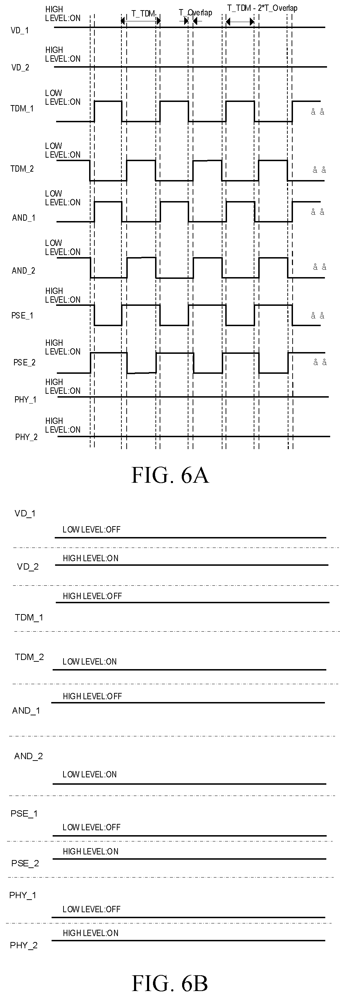

As shown in FIG. 5A, under the polling mechanism based on the scheduling module, the control signal TDM_1 output by the scheduling module is equal to 0, TDM_2 is equal to 1, so as to turn on (which may also be referred to as activate) PSE_1 and put PSE_2 in an inactive state (which may also be referred to as an turned-off state). Accordingly, AND_1 outputs 0 to turn on PSE_1 and AND_2 outputs 1 to turn off PSE_2. Because both the two second devices PSE_1 and PSE_2 are powered on, PHY_1 and PHY_2 are also turned on, allowing communication. The timing diagram of the above process is shown in FIG. 6A.

Considering the response time (T_res) required by the drive circuit of the switch unit to switch the PSE, enough margin (T_Overlap) should be reserved around each turned-on period (T_TDM), so that the turned-on times of the successively turned-on switch units are partially overlapped, thereby preventing the interruption of power supply caused by the turned-off of the switch units connected to the two second devices PSE_1 and PSE_2. To this end, T_Overlap > T_res may be set. Here, T_TDM may not be specifically limited. TDM_1 and TDM_2 have the same duty cycle, and the duty cycle $\eta_{TDM}$ follows the formula:

$$\eta_{TDM} = \frac{T_{TDM}}{2T_{TDM} - 2T_{overlap}}$$

(B) The case where only a single second device (e.g., PSE_2) is powered on is described next.

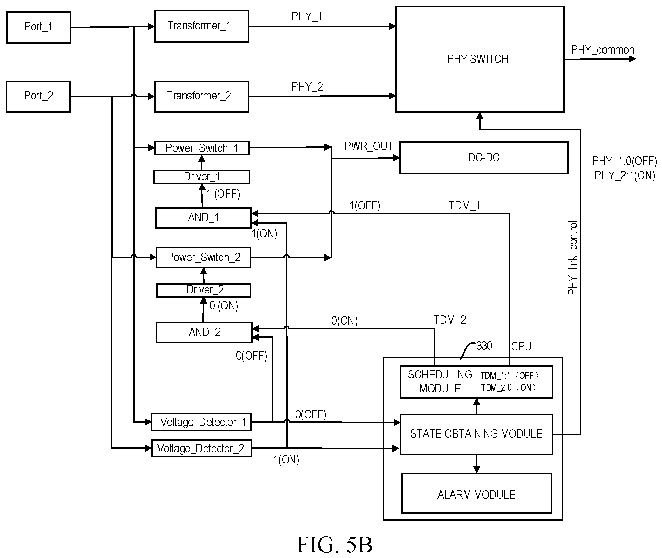

As shown in FIG. 5B, since PSE_1 is powered off and PSE_2 is powered on, the output VD_1 of voltage detector Voltage_Detector_1 is 0, and the output VD_2 of voltage detector Voltage_Detector_2 is 1. At this time, the polling mechanism does not need to exist in the scheduling module, the value of TDM_1 is forced to be set to 1 (OFF), and the value of TDM_2 is forced to be set to 0 (ON). Accordingly, AND_1 outputs 1 to turn off PSE_1 and AND_2 outputs 0 to turn on PSE_2. In this case, the PHY link control state is forced to be set to PHY_1 as 0 (OFF) and PHY_2 as 1 (ON), allowing PSE_2 to communicate with the first device 110 without allowing PSE_1 to communicate with the first device 110. The timing diagram of the above process is shown in FIG. 6B.

The timing diagrams based on other scenarios of FIG. 5A and FIG. 5B will not be repeated here, since they are constructed based on these two cases.

(C) When the two second devices PSE_1 and PSE_2 are both powered off, the first device 110 cannot be powered. This will not be discussed in detail.

(D) The following describes a transient state from the time when two second devices PSE_1 and PSE_2 are both powered on to a time when one second device is suddenly powered off.

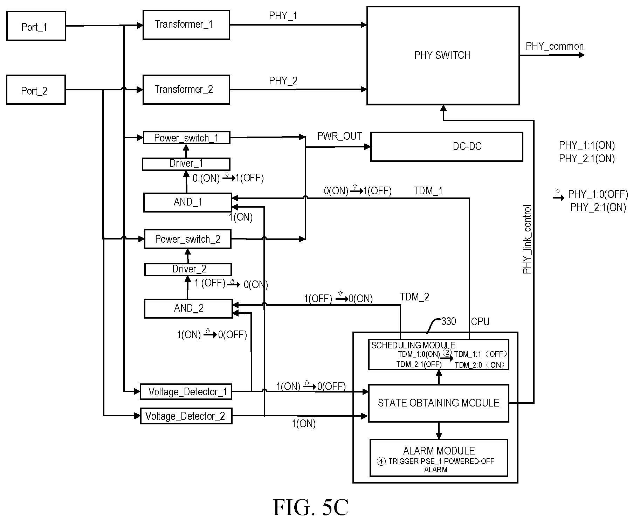

As shown in FIG. 5C, the logic control process of the above case is as follows:

① [logical processing] Once the output VD_1 of Voltage_Detector_1 changes from 1 to 0, the input of Driver_2 is set equal to 0 (ON) at the output of AND_2, regardless of whether TDM_2 is equal to 0, thereby quickly turning on another second device PSE_2 in a pure hardware manner.

(2) [Software processing] The operation of the scheduling module will be interrupted, and TDM_1 = 1 (OFF) and TDM_2 = 0 (ON) are forcibly set.

③ [logical processing] Based on step , the input of Driver_1 is switched to 1 (OFF) and the output of Driver_2 is still equal to 0 (ON). So far, the first device 110 enters a new steady state cycle, that is, PSE_1 is powered off, and PSE_2 supplies power to the first device 110.

④ [software processing] The alarm module triggers the PSE_1 power-off alarm.

⑤ [logical processing] The processing unit 330 changes the PHY link control state from (PHY_1: 1(ON), PHY_2: 1 (ON)) to (PHY_1: 0 (OFF), PHY_2: 1 (ON)), and prevents communication of PSE_1.

The turned-on and turned-off of PSE_1 and PSE_2 are hot switching, and do not cause power failure and service interruption of the first device 110.

(E) In a transient situation in which the two second devices PSE_1 and PSE_2 change from being powered on to being powered off, the first device 110 cannot continue to be powered on. This will not be discussed in detail.

(F) In a case where power from only a single second device changes to two second devices PSE_1 and PSE_2, the first device 110 cannot continue to be powered. This will not be discussed in detail.

(G) A transient situation from "only a single second device is powered on" to "still only a single second device is powered on, but becomes another second device powered on" is described next.

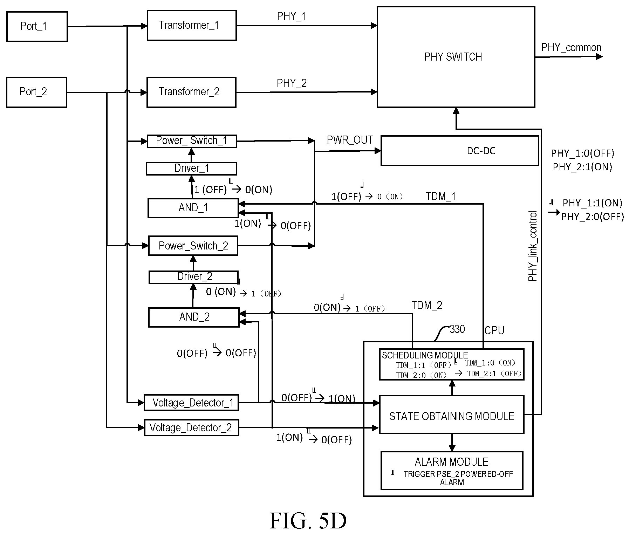

As shown in FIG. 5D, the logic control process of the above case is as follows:

① [Logic Processing] Once VD_1 is changed from 0 to 1 and VD_2 is changed from 1 to 0, the output 0 (ON) of Driver_1 is set at the output of AND_1 regardless of whether TDM_1 is equal to 0, thereby quickly turning on PSE_1.

(2) [Software processing] The operation of the scheduling module continues to be interrupted and forces TDM_1 = 0 (ON) and TDM_2 = 1 (OFF).

③ [logical processing] Based on step ② , Driver_2 is switched to 1 (OFF). Until now, the PD enters a new round of steady state, that is, PSE_2 is powered off, and PSE_1 supplies power to the first device 110.

④ [software processing] The alarm module triggers the PSE_2 power-off alarm.

⑤ [logical processing] The processing unit 330 changes the PHY link control state from (PHY_1:0(OFF), PHY_2:1(ON)) to (PHY_1: 1 (ON), PHY_2: 0 (OFF)), and prevents communication of PSE_2.

The turned-on and turned off of PSE_1 and PSE_2 are hot switching, and do not cause power failure and service interruption of the first device 110.

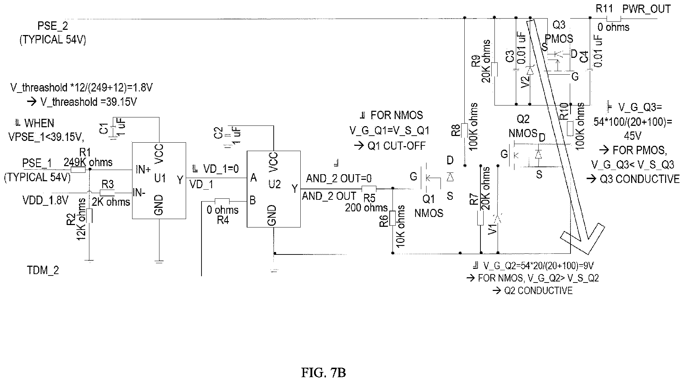

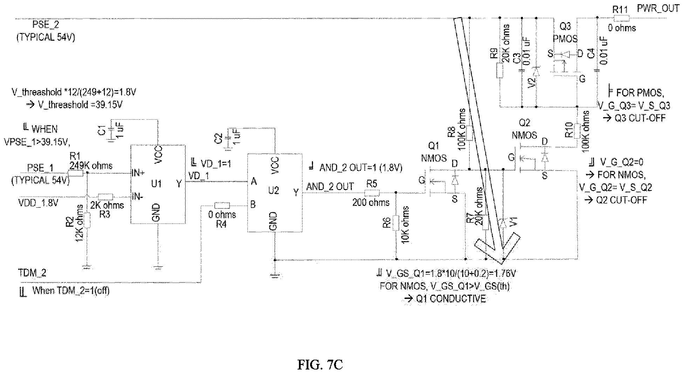

Next, an example structure of the voltage detection unit and the switch unit and an example process of turning on and off the second device are described in conjunction with FIGS. 7A to 7C. FIG. 7A shows a schematic circuit diagram of a part of a voltage detection unit and a switch unit in the first device shown in FIG. 4A, FIG. 7B shows an example process of turning on PSE_2 by using the switch unit shown in FIG. 7A, and FIG. 7C shows an example process of turning off PSE_2 by using the switch unit shown in FIG. 7A.

FIG. 7A shows an example structure of a voltage detector Voltage_Detector_1, an AND gate AND_2, a drive circuit Driver_2, and a power switch component Power_Switch_2. The voltage detector Voltage_Detector_1 may comprise a comparator. The comparator may compare the detected divided voltage of the second device with a voltage threshold to determine the state of the second device. Transistors Q1 and Q2 in Driver_2 are NMOS transistors (N-channel Metal-Oxide-Semiconductor Transistor). The transistor Q3 in the power switch component Power_Switch_2 is a PMOS transistor (P- channel Metal-Oxide-Semiconductor Transistor).

As shown in FIG. 7B, when the voltage of PSE_1 is lower than the threshold, the logic and control circuit will turn on PSE_2, and the specific steps are as follows.

① Threshold olds.

$$V_{threashold} * \frac{R_2}{R_1 + R_2} = IN-$$

Here, $V_{threashold} * \frac{R_2}{R_1 + R_2} = 1.8/12 * (249+12) = 39.15V$.

②When the feed voltage V_PSE_1 of PSE_1 is less than 39.15V, VD_1 equals to 0.

③ Regardless of the values of the input PIN_B and TDM_2 of AND_2, AND_2 always outputs a low level since the input PIN_A of AND_2 is 0.

④ Since V_GS of the NMOS transistor Q1 equals to 0, Q1 becomes cut-off.

⑤ Since V_GS_Q2 of the NMOS transistor Q2 equals to 54 * 20/ (20 + 100) = 9V, Q2 becomes conductive.

(6) Since V_G_Q3 of PMOS transistor Q3 equasl to 54 * 100/ (20 + 100) = 45V, and V_G_Q3 < V_S_Q3, Q3 becomes conductive. As a result, PSE_2 is turned on to PWR_OUT.

FIG. 7C illustrates how PSE_2 is turned off when the feed voltage of PSE_1 exceeds a threshold, with specific steps as follows.

① When TDM_2 = 1 (OFF) and the feed voltage of PSE_1 is higher than the threshold.

② VD_1 equals to 1.

③ AND_2 outputs a high level (1.8V) because both inputs of AND_2 are 1.

④ Since V_GS_Q1 = 1.8 * 10/ (10 + 0.2) = 1.76V, V_GS_Q1 > V_GS(th) (typically 0.6V), the NMOS transistor Q1 becomes conductive.

⑤ Since V_GS_Q2 = 0, the NMOS transistor Q2 becomes cut-off.

(6) Since V_GS_Q3 = 0, the PMOS transistor Q3 becomes cut-off, thereby turning off PSE_2.

Based on FIG. 5C, in the case of replacing the second device, it should be ensured that the PSE_2 can be successfully turned on before the processing unit 330 is powered off, for which a transient response needs to be considered. Based on the test results, 1ms later after PSE_1 becomes powered off, PSE_2 can be successfully turned on. In fact, as shown in FIG. 7B, before V_G_Q3 reaches the stable 45V, C3 needs to be charged through the RC(R10 in series with C3) charging circuits. The charging time of C3 obtained by theoretical calculation is 0.9 ms, which matches the test result.

It is found through testing that the power supply (VDD_3.3V) of the processing unit 330 is also powered off 1.68 ms after the PSE_1 is powered off.

Through testing, it is found that the response time between PSE_1 is powered off and the TDM_1 off instruction/TDM_2 on instruction output by the processing unit 330 is about 74 ms.

Therefore, it can be confirmed that once the PSE_1 is powered off, the PSE_2 can be successfully turned on before the processing unit 330 is powered off, and the hot switch cannot be ensured to be successful only by means of software instructions.

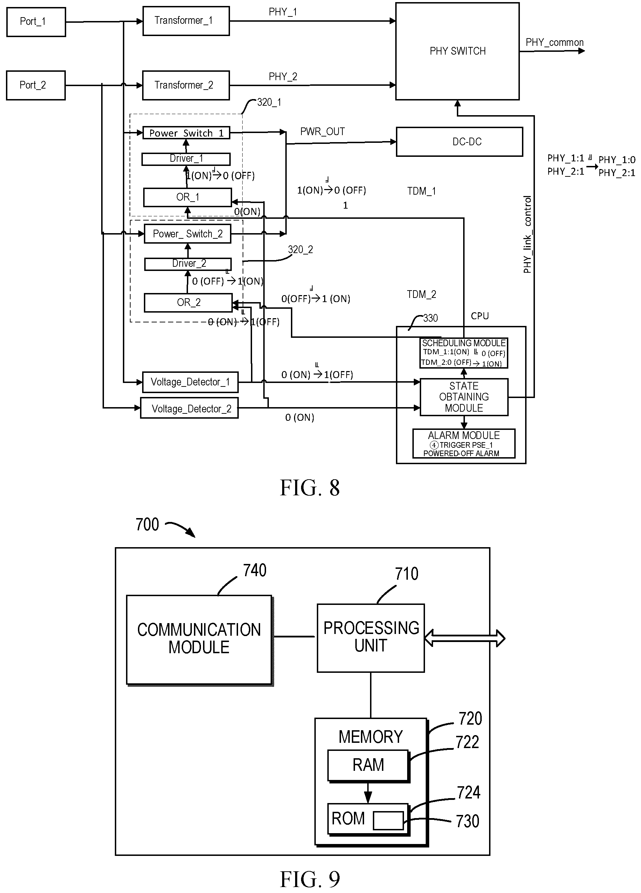

FIG. 8 illustrates control logic within the first device shown in FIG. 4B. As shown in FIG. 8, since the switch units 320_1 and 320_2 are implemented by OR gates, the corresponding second device 120 may be turned on based on a high level, and the specific process will not be repeated here.

According to embodiments of the present disclosure, a lower cost logic and control circuit can be used to replace expensive hardware circuits required by different PSE balancing voltages, significantly reducing the cost of the first device such as PD.

In addition, according to the embodiment of the disclosure, the fairness of power supply of the plurality of second devices can be ensured.

In addition, according to the embodiment of the present disclosure, it can be ensured that the first device is not powered off in any case through the TDM sequence and the hot switch mechanism, and communication is not interrupted, thereby ensuring reliable operation of the first device.

In addition, according to the embodiment of the present disclosure, stable switching of different second devices can be ensured through a time division multiplexing mechanism, so that there is no need to occupy too many software resources.

FIG. 9 is a simplified block diagram of a device 700 suitable for implementing example embodiments of the present disclosure. The device 700 may be used to implement the first device 110 in the environment 100. As shown, the device 700 comprises one or more processing units 710, one or more memories 720 coupled to the processing units 710, and a communication module 740 coupled to the processing units 710.

The communication module 740 is for bidirectional communications. In some example embodiments, the communication module 740 has at least one antenna for communication. In some example embodiments, the communication module 740 may have one or more communication interfaces. The communication interfaces may represent any interface that is necessary for communication with other network elements.

The processing unit 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The computer program 730 may be stored in the ROM 724. The processing unit 710 may perform any suitable actions and processing by loading the computer program 730 into the RAM 722.

The example embodiments of the present disclosure may be implemented by means of computer program 730 so that the device 700 may perform any process of the disclosure as discussed with reference to FIG. 2 to FIG. 8. The example embodiments of the present disclosure may also be implemented by hardware or by a combination of software and hardware.

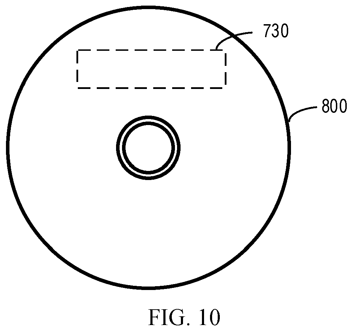

In some example embodiments, the computer program 730 may be tangibly contained in a computer readable medium which may be included in the device 700 (such as in the memory 720) or other storage devices that are accessible by the device 700. The computer program 730 may be loaded from the computer readable medium to the RAM 722 for execution. The computer readable medium may include any types of tangible non-volatile memory, such as ROM, EPROM, a flash memory, a hard disk, CD, DVD, and the like. FIG. 10 shows an example of the computer readable medium 800 which may be in form of CD or DVD. The computer readable medium 800 has the computer program 730 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a computer readable storage medium. In some example embodiments, the computer readable storage medium may be non-transient. The computer program product includes computer-executable instructions, such as those included in program modules, being executed in a device on a target physical or virtual processor, to carry out the process 200 as described above with reference to FIG. 2. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like. Examples of signals may include electrical, optical, radio, sound, or other forms of propagated signals, such as carrier waves, infrared signals, etc.

The computer readable medium may be any tangible medium that contains or stores programs for or related to instruction execution systems, apparatuses or devices. The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical storage device, a magnetic storage device, or any suitable combination of the foregoing.

Further, although operations of the method of this disclosure are depicted in a particular order, this should not be understood as requiring or suggesting that such operations be performed in the particular order, or that all illustrated operations be performed, to achieve desirable results. Rather, the steps depicted in the flowchart may change the order of execution. Additionally or alternatively, certain steps may be omitted, multiple steps may be combined into one step execution, and/or one step may be decomposed into multiple steps for execution. It should also be noted that features and functions of two or more apparatuses according to the present disclosure may be embodied in one apparatus. Conversely, the features and functions of one apparatus described above may be further divided into multiple apparatuses.

While the disclosure has been described with reference to several specific embodiments, it should be understood that the disclosure is not limited to the specific embodiments disclosed. This disclosure is intended to cover various modifications and equivalent arrangements included within the spirit and scope of the appended claims.

**Claims**

1. A method for a first device (110), comprising:

   obtaining (210) operating states of a plurality of second devices (120) connected to a plurality of connection ports of the first device (110);
   in response to the operating states indicating that feed voltages provided by at least two second devices (120) among the plurality of second devices (120) satisfy a predetermined voltage level, causing (220) at least two switch units (320_1, 320_2) corresponding to the at least two second devices (120) among a plurality of switch units to be alternately turned on, each of the plurality of switch units being coupled to a respective connection port of the plurality of connection ports, wherein the turned-on second devices supply power to the first device (110); and
   causing (230) the first device (110) to transmit communication signals to the at least two second devices (120), without transmitting communication signals to other second devices (120) than the at least two second devices (120) among the plurality of second devices (120).

2. The method of claim 1, wherein causing (220) the at least two switch units (320_1, 320_2) to be alternately turned on comprises:

causing the at least two switch units (320_1, 320_2) to be alternately turned on through time division multiplexing, wherein the at least two switch units are turned on for the same duration
, wherein for example the method further comprises:
causing turned-on time of successively turned-on switch units of the at least two switch units to be partially overlapped.

3. The method of claim 1, wherein in response to a feed voltage of a currently power-supplying second device of the at least two second devices (120) no longer satisfying the predetermined voltage level, a switch unit corresponding to the currently power-supplying second device among the plurality of switch units is turned off, and a switch unit corresponding to another second device of the at least two second devices (120) other than the currently power-supplying second device among the plurality of switch units is turned on.

4. The method of claim 3, further comprising:
causing the first device to stop transmitting communication signals to the turned-off second device.

5. The method of claim 3, further comprising:
triggering an alarm in response to the feed voltage of the currently power-supplying second device no longer satisfying the predetermined voltage level.

6. The method of claim 1, further comprising:

in response to the operating states indicating that the feed voltage provided by only a single second device among the plurality of second devices satisfies the predetermined voltage level, causing (270) a switch unit corresponding to the single second device among the plurality of switch units (320_1, 320_2) be to turned on, wherein the single second device supplies power to the first device
, wherein for example in response to the feed voltage of the single second device no longer satisfying the predetermined voltage level and at the same time a feed voltage of another second device among the plurality of second devices satisfying the predetermined voltage level, a switch unit corresponding to the single second device among the plurality of switch units is turned off and a switch unit corresponding to the another second device among the plurality of switch units is turned on.

7. The method of any of claims 1-6, wherein the operating states are generated by a voltage detection unit coupled to the plurality of connection ports, and the voltage detection unit is configured to:

detect feed voltages provided by the plurality of second devices;
compare the detected feed voltages to a predetermined threshold; and
generate the operating states based on the comparison.

8. A first device (110), comprising:

a plurality of connection ports adapted to connect to a plurality of second devices (120);
a plurality of switch units (320_1, 320_2) each coupled to a respective connection port of the plurality of connection ports; and
a processing unit (330) coupled to the plurality of switch units and configured to:

obtain (210) operating states of a plurality of second devices;
in response to the operating states indicating that feed voltages provided by at least two second devices among the plurality of second devices satisfy a predetermined voltage level, cause (220) at least two switch units (320_1, 320_2) corresponding to the at least two second devices among a plurality of switch units to be alternately turned on, wherein the turned-on second devices supply power to the first device; and
cause (230) the first device (110) to transmit communication signals to the at least two second devices (120), without transmitting communication signals to other second devices than the at least two second devices (120) among the plurality of second devices (120).

9. The first device (110) of claim 8, wherein the processing unit (330) is further configured to cause the at least two switch units to be alternately turned on through time division multiplexing, and the at least two switch units are turned on for the same duration
, wherein for example the processing unit (330) is further configured to:
cause turned-on time of successively turned-on switch units of the at least two switch units to be partially overlapped.

10. The first device (110) of claim 8, wherein in response to a feed voltage of a currently power-supplying second device of the at least two second devices no longer satisfying the predetermined voltage level, a switch unit corresponding to the currently power-supplying second device among the plurality of switch units is turned off, and a switch unit corresponding to another second device of the at least two second devices other than the currently power-supplying second device among the plurality of switch units is turned on.

11. The first device (110) of claim 10, wherein the processing unit (330) is further configured to:
cause the first device to stop transmitting communication signals to the turned-off second device.

12. The first device (110) of claim 10, wherein the processing unit (330) is further configured to:
trigger an alarm in response to the feed voltage of the currently power-supplying second device no longer satisfying the predetermined voltage level.

13. The first device (110) of claim 8, wherein the processing unit (330) is further configured to:

in response to determining that the feed voltage provided by only a single second device among the plurality of second devices satisfies the predetermined voltage level, cause a switch unit corresponding to the single second device among the plurality of switch units be to turned on, wherein the single second device supplies power to the first device
, wherein for example in response to the feed voltage of the single second device no longer satisfying the predetermined voltage level and at the same time a feed voltage of another second device among the plurality of second devices satisfying the predetermined voltage level, a switch unit corresponding to the single second device among the plurality of switch units is turned off and a switch unit corresponding to the another second device among the plurality of switch units is turned on.

14. The first device (110) of any of claims 8-13, further comprising a voltage detection unit coupled to the plurality of connection ports and the processing unit, the voltage detection unit is configured to:

detect feed voltages provided by the plurality of second devices;
compare the detected feed voltages to a predetermined threshold; and
generate the operating states based on the comparison.

15. A computer-readable storage medium (720) having a computer program (730) stored thereon, the computer program (730) comprising instructions that, when executed by a processor (710) on a device, cause the device to perform the method of any of claims 1-7.

100

120

HOU_1

120

110

MDU

HOU_2

120

HOU_m

FIG. 1

200

210

OBTAIN OPERATING STATES OF A PLURALITY OF SECOND DEVICES CONNECTED TO A PLURALITY OF CONNECTION PORTS OF THE FIRST DEVICE

270

IN RESPONSE TO THE OPERATING STATES INDICATING THAT THE FEED VOLTAGE PROVIDED BY ONLY A SINGLE SECOND DEVICE AMONG THE PLURALITY OF SECOND DEVICES SATISFIES THE PREDETERMINED VOLTAGE LEVEL, CAUSE A SWITCH UNIT CORRESPONDING TO THE SINGLE SECOND DEVICE AMONG THE PLURALITY OF SWITCH UNITS BE TO TURNED ON

280

IN RESPONSE TO THE FEED VOLTAGE OF THE SINGLE SECOND DEVICE NO LONGER SATISFYING THE PREDETERMINED VOLTAGE LEVEL AND AT THE SAME TIME A FEED VOLTAGE OF ANOTHER SECOND DEVICE AMONG THE PLURALITY OF SECOND DEVICES SATISFYING THE PREDETERMINED VOLTAGE LEVEL, A SWITCH UNIT CORRESPONDING TO THE SINGLE SECOND DEVICE AMONG THE PLURALITY OF SWITCH UNITS IS TURNED OFF AND A SWITCH UNIT CORRESPONDING TO THE ANOTHER SECOND DEVICE AMONG THE PLURALITY OF SWITCH UNITS IS TURNED ON

220

IN RESPONSE TO THE OPERATING STATES INDICATING THAT FEED VOLTAGES PROVIDED BY AT LEAST TWO SECOND DEVICES SATISFY A PREDETERMINED VOLTAGE LEVEL, CAUSE AT LEAST TWO SWITCH UNITS CORRESPONDING TO THE AT LEAST TWO SECOND DEVICES AMONG A PLURALITY OF SWITCH UNITS TO BE ALTERNATELY TURNED ON

240

IN RESPONSE TO A FEED VOLTAGE OF A CURRENTLY POWER-SUPPLYING SECOND DEVICE OF THE AT LEAST TWO SECOND DEVICES NO LONGER SATISFYING THE PREDETERMINED VOLTAGE LEVEL, A SWITCH UNIT CORRESPONDING TO THE CURRENTLY POWER-SUPPLYING SECOND DEVICE AMONG THE PLURALITY OF SWITCH UNITS IS TURNED OFF, AND A SWITCH UNIT CORRESPONDING TO ANOTHER SECOND DEVICE OF THE AT LEAST TWO SECOND DEVICES OTHER THAN THE CURRENTLY POWER-SUPPLYING SECOND DEVICE AMONG THE PLURALITY OF SWITCH UNITS IS TURNED ON

260

TRIGGER AN ALARM

230

CAUSE THE FIRST DEVICE TO TRANSMIT COMMUNICATION SIGNALS TO THE AT LEAST TWO SECOND DEVICES, WITHOUT TRANSMITTING COMMUNICATION SIGNALS TO OTHER SECOND DEVICES THAN THE AT LEAST TWO SECOND DEVICES AMONG THE PLURALITY OF SECOND DEVICES

250

CAUSE THE FIRST DEVICE TO STOP TRANSMITTING COMMUNICATION SIGNALS TO THE TURNED-OFF SECOND DEVICE

FIG. 2

FIG. 3

FIG. 4A

FIG. 4B

FIG. 5A

FIG. 5B

FIG. 5C

EP 4 637 082 A2

FIG. 5D

26

FIG. 6A

FIG. 6B

FIG. 7A

FIG. 7B

FIG. 7C

FIG. 8

FIG. 9

FIG. 10